# EUROPEAN PATENT APPLICATION

(11) **EP 2 720 430 A1**
(43) Date of publication of application: **16.04.2014**
(21) Application number: 13004928.1
(22) Date of filing: 15.10.2013
(51) Int. Cl.: H04L 29/06, H04L 29/08

(54) **Secure handoff among devices during media playback**

(30) Priority: 15.10.2012 US 201261714197 P; 28.02.2013 US 201313780418
(71) Applicant: Broadcom Corporation, Irvine, CA 92617 (US)
(72) Inventor: Chen, Xuemin, Rancho Santa Fe, CA 92067 (US); Trammel, Troy, San Jose, CA 95129 (US); Bennett, James, 36301 Hroznetin (CZ)
(74) Representative: Jehle, Volker Armin

(57) **Abstract**

Secure handoff among devices during media playback. Playback of media, from one or more sources, on two or more respective devices is performed in an automated or simplified manner based upon a near field communications (NFC) or like security pairing transaction between those devices. The security pairing may provide direction for any of a number of operational parameters by which the media is to undergo playback on the different respective devices (e.g., source of the media, quality of the media, digital rights management (DRM), an authentication, authorization, and accounting (AAA) protocol, etc.). Certain implementations allow for user interaction to augment or override automatic or seamless operation between the respective devices for continuous playback of media thereon. Successive security pairings may be performed within any of a number of respective devices (e.g., from a first device to a second device, from a second device to a third device, etc.).

## Description

### CROSS REFERENCE TO RELATED PATENTS/PATENT APPLICATIONS

### Provisional priority claims

The present U.S. Utility Patent Application claims priority pursuant to 35 U.S.C. § 119(e) to the following U.S. Provisional Patent Application which is hereby incorporated herein by reference in its entirety and made part of the present U.S. Utility Patent Application for all purposes:
1. U.S. Provisional Patent Application Serial No. 61/714,197, entitled "Secure handoff among devices during media playback," (Attorney Docket No. BP30643), filed 10-15-2012, pending.

### BACKGROUND OF THE INVENTION TECHNICAL FIELD OF THE INVENTION

The invention relates generally to communication systems; and, more particularly, it relates to cooperation between respective communication devices operative to perform media playback.

### DESCRIPTION OF RELATED ART

Data communication systems have been under continual development for many years. Modern communication networks may include a wide variety of components and devices, and certain users may access a different components or nodes within such systems at different respective times. With respect to consumption of media (e.g., video, audio, photos, etc.), for example, users may consume such media using any of a variety of different types of networked devices.

Certain devices may have capabilities that are different than other devices in a communication network. For instance, playback capabilities may vary in accordance with any of a number of playback parameters such as resolution, aspect ratio, frame rate, quality (standard definition versus high-definition, of any of a variety of degrees), etc. In addition, users may consume media during times when any of a number of such devices is in relatively close proximity. Further, during a given number of relatively close time periods or directly adjacent/successive time periods, a user may wish to consume media using a number of different devices. The present state-of-the-art does not provide a highly effective and efficient means by which operation and coordination among different respective devices may be made in a sufficiently acceptable manner.

### BRIEF SUMMARY OF THE INVENTION

According to an aspect, a device is provided that supports an ongoing media delivery session arranged between a host device and a media player system, the ongoing delivery session of first media having current playback position data and related media data, the arrangement involving a first secure interaction between the host device and the media player system, the device supporting a first user, the device comprising:
a first communication interface that communicatively couples via at least one of contact and near contact;
processing circuitry coupled to the first communication interface;
memory coupled to the processing circuitry;
host circuitry, operable to play media content, having a first characteristic relating to media playback;
a second communication interface coupled to the host circuitry;
a third communication interface operable to receive media content;
the processing circuitry being operable, via the first communication interface, both to receive the media data and the current playback position data and to send the first characteristic; and
the host circuitry beginning playback of the first media at a location within the first media relating to the current playback position data, and establishing the playback by the host circuitry is simplified for the first user.

Advantageously, the first communication interface communicatively couples via near field communications (NFC).

Advantageously, the processing circuitry further operable, via the first communication interface and memory, to exchange authentication, authorization and accounting (AAA) protocol information.

Advantageously, the processing circuitry further operable, via the first communication interface, to send media data and updated playback position data in support of a second secure interaction involving the ongoing media delivery session.

Advantageously, the host circuitry operable to playback a different version or format of the first media as indicated, at least in part, by the first characteristic.

Advantageously, the first characteristic relating to a video resolution supported by the host circuitry.

Advantageously, the memory configured with secure key exchange information.

Advantageously, the media data including at least one item of information selected from the group consisting of: unique media identifier, playback format information, bandwidth requirements for delivery of media, and media source information.

According to an aspect, a device is provided that supports handoff of an ongoing media delivery session arranged between a host device and a media source, the ongoing delivery session of first media having current playback position data and related media data, the handoff involving a secure interaction between the host device and a recipient device, the device comprising:
a first communication interface that communicatively couples via at least one of contact and near contact;
processing circuitry coupled to the first communication interface;
memory coupled to the processing circuitry;
host circuitry, operable to play media content;
a second communication interface coupled to the host circuitry;
a third communication interface operable to receive media content from the media source; and
the processing circuitry being operable, via the first communication interface, to send the media data and the current playback position data.

Advantageously, the first communication interface communicatively couples via near field communications (NFC).

Advantageously, the processing circuitry further operable, via the first communication interface and memory, to securely exchange authentication, authorization and accounting (AAA) protocol information with a recipient device.

Advantageously, the memory configured with secure key exchange information.

Advantageously, the device comprises a smart phone.

According to an aspect, a method is provided for operating a first communication device and a second communication device, the method comprising:
operating the first communication device to perform playback of at least a first portion of media; and
operating the second communication device to perform playback of at least a second portion of the media, including beginning playback of the at least a second portion of the media following a contact or near contact security pairing transaction between the first communication device and the second communication device.

Advantageously, the contact or near contact security pairing transaction comprising near field communications (NFC).

Advantageously, the method further comprises:
communicating, from the first communication device to the second communication device, current playback position data for the first portion of media,
the at least a second portion of the media being determined, at least in part, by the current playback position data.

Advantageously, the method further comprises:
operating the first communication device to perform playback of the at least a first portion of the media in accordance with at least a first operational parameter relating to capabilities of the first communication device; and
operating the second communication device to perform playback of the at least a second portion of the media in accordance with at least a second operational parameter that corresponds to and differs from the first operational parameter.

Advantageously, the method further comprises:
performing the playback of the at least a first portion of the media in accordance with a first authentication, authorization, and accounting (AAA) protocol; and
performing the playback of the at least a second portion of the media in accordance with the first AAA protocol or a second AAA protocol.

Advantageously, the method further comprises:
receiving the at least a first portion of the media via at least one communication network from a service provider; and
receiving the at least a second portion of the media via at least one additional communication network from the service provider or at least one additional service provider.

Advantageously, the at least a second portion of the media is provided to the second communication device by the first communication device.

### BRIEF DESCRIPTION OF THE SEVERAL VIEWS OF THE DRAWINGS

**FIG. 1** illustrates a communication system having media delivery and playback capabilities in accordance with an embodiment of the present disclosure.
**FIG. 2** illustrates a communication module in accordance with an embodiment of the present disclosure.
**FIG. 3** illustrates short range wireless or near field communications (NFC) between two or more devices in accordance with an embodiment of the present disclosure.
**FIG. 4** illustrates media playback involving NFC security pairing in accordance with an embodiment of the present disclosure.
**FIG. 5** illustrates media playback with NFC security pairing in accordance with an alternate embodiment of the present disclosure.
**FIG. 6** illustrates media characteristic variation during playback across devices/platforms in accordance with an embodiment of the present disclosure.
**FIG. 7** illustrates media delivery to different respective devices from one or more sources in accordance with an embodiment of the present disclosure.
**FIG. 8A, FIG. 8B****,** **FIG. 9** and **FIG. 10** illustrate various embodiments of methods for operating one or more communication devices in accordance with the present disclosure.

### DETAILED DESCRIPTION OF THE INVENTION

While certain embodiments of the foregoing disclosure are described in conjunction near field communications (NFC), other embodiments of the present invention may be practiced with a variety of current or future short range or proximity-based communication technologies and protocols. Likewise, while certain embodiments are described as implemented by mobile communication devices (e.g., smart phones), the novel architectures and methodologies are applicable in whole or in part to other devices, including media consumption devices such as set top boxes (STB's), PVR's, DVD players, access points, televisions, computing devices, gateways, etc., including combinations thereof.

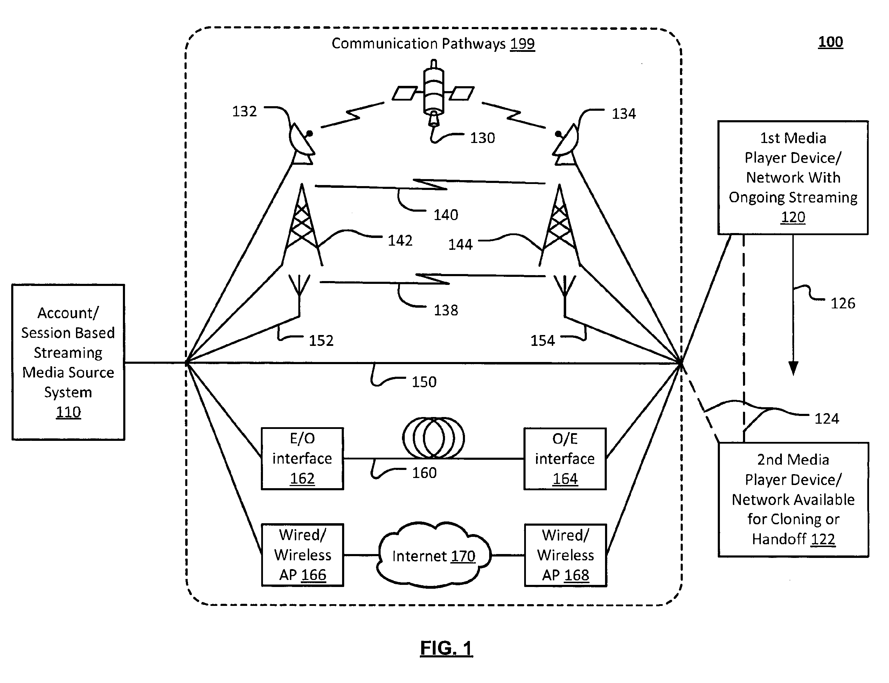

Referring to **FIG. 1****,** a communication system 100 having media delivery and playback capabilities in accordance with the present disclosure is shown. In the illustrated embodiment, an account or session based streaming media source system 110 ("media source 110") provides streaming media to a first media player device/network 120 ("device 120") via one or more communication pathways 199. The media source 110 may be a broadcast, unicast, multicast, etc. source. Such sources may include, for example, a cable or satellite service provider/headend, a hosted subscription service (e.g., Netflix), an over-the-top (internet) server-based service or application (e.g., YouTube), an IP camera, a mobile video source, etc.

In the illustrated embodiment, the device 120 is operable to communicate with a second media player device/network 122 ("device 122") available for media delivery cloning operations and/or media session handoff. In particular, device 120 may establish a secure proximity pathway 126 (such as a NFC or similar contact or near contact link) through which a media session may be handed off or cloned without having to restart the delivery process. As detailed below, one or more additional pathways 124 may be utilized to deliver a redirected or cloned media stream. It is noted that respective devices 120 and 122 may be comprised of more than one device in some embodiments. For example, device 122 might take the form of a set top box coupled by a wired/wireless connection to a television in an entertainment room. Device 120 could likewise be an entertainment network device in addition to a television, tablet device, smart phone, access point, media server, etc. In still further embodiments, the device 120 may function only to clone and handoff a media session without actually consuming or displaying such media.

As shown in **FIG. 1****,** media and related data may be transmitted over a variety of wired and wireless communications pathways and systems. Different types of communication media by which the communication pathways 199 may be implemented include, by way of example, a satellite communication pathway 130 using satellite dishes 132 and 134, a wireless communication pathway 138 or 140 using towers 142 and 144 and/or local antennae 152 and 154, a wired communication pathway 150, a fiber-optic communication pathway 160 using electrical to optical (E/O) interface 162 and optical to electrical (O/E) interface 164), and/or internet pathway 170 via wired/wireless access points 166 and 168. In addition, more than one type of communication media may be implemented and interfaced together (such as a heterogeneous network or HetNet) to form the communication pathways 199 for media delivery.

It is further noted that the initial communication pathway(s) utilized for delivery of media to device 120 does not necessarily need to be maintained following a media delivery handoff/cloning event. For example, device 122 can utilize one or more separate communication pathways 199 to interface with media source 110 (or an alternate media source configured for a particular pathway, device or device type. As illustrated, device 122 may even (temporarily) use a pathway through device 120 if it remains available (e.g., device 120 may forward or relay a media stream), and device 122 need not have direct access to communication pathways 199. If direct access is available, power consumption concerns may still justify a media flow through device 120. Such media flow might also involve media transcoding to accommodate particular characteristics of device 122 or a communication link between device 120 and device 122.

Likewise, device 120 might continue such media flow and service even when device 122 is out of range of a direct link with device 120. For example, an ongoing media session may be provided via a wired/wireless access point 168 and/or through multiple communication pathways in a multi-hop flow (e.g., using server IP redirect or video "slinging" techniques) to reach device 122. Such a configuration might work well, for example, in circumstances where the original media source only provides media in a fixed format, broadcast fashion tailored for devices such as device 120 (but not device 122) and device 122 desires to receive delivery at a later point in time. In such instances, a pairing transaction between devices 120 and 122 may provide playback position data (which might include frame offset and or reference frame syncing information) and related media data such as unique media identifiers, playback format information, bandwidth requirements for delivery of media, and media source information (such as an HTTP address, subscriber account information, etc.).

In still further embodiments, handoff of an ongoing media delivery session arranged between a first device 120 and a second 122 may be initiated via a NFC link (e.g., through a key exchange/challenge operation), but completed through a secondary path such as a more robust wired link or an ongoing media stream delivery pathway (and possibly involving a more complex authentication process). Other entities may be involved in a device pairing transaction including, for example, a media source 110 having account and billing management infrastructure. In addition, a device 120 may be operable to engage in related, proximity-based pairing and handoff transactions with multiple devices 122, such as existing or new devices in a home entertainment network.

It is noted that such devices 120 and/or 122 may be stationary or mobile without departing from the scope and spirit of the invention. For example, either one or both of the devices 120 and 122 may be implemented in a fixed location or may be a mobile communication device with capability to associate with and/or communicate with more than one network access point (e.g., different respective access points (APs) in the context of a mobile communication system including one or more wireless local area networks (WLANs), different respective satellites in the context of a mobile communication system including one or more satellites, or generally, different respective network access points in the context of a mobile communication system including one or more network access points by which communications may be effectuated with communication devices 120 and/or 122.

In certain usage scenarios (such as those described more fully below), different versions or formats of a given media item may be (necessarily) consumed following a handoff event. For example, a user may begin watching a free, relatively low quality version of movie on smart phone. Upon entering a home media room, the smart phone and a local set top box/television may perform a security pairing operation that allows for continued viewing of a higher quality version of the movie. The handoff event might offer the low quality version of the movie as well as various other quality options (e.g., full HD) having different associated costs and payment options. In one embodiment, the cost of a higher quality movie might be discounted based on the remaining amount of the movie to be delivered.

Similarly, a user may be in the process of viewing media content via a set top box/television infrastructure while at home, but then need to leave and travel to a different region. The user may wish to continue viewing the content while traveling, or elect to watch it at a future point in time. In either situation, the user might then bring a smart phone (or other user device) in range for a security pairing and handoff transaction that transfers current playback position data and related media data (for one or more relevant media items) to the smart phone. If the user desires to continue consuming the media while traveling, an IP-based media streaming service or downloaded file might be utilized for continued viewing over the smart phone.

When the user arrives at a destination such as a hotel room, a second (NFC based) pairing and handoff transaction might be conducted by placing the smart phone in proximity to television in the room in order to continue media consumption. If the relevant media is determined to exist on a local server, it may be directly streamed to the television (possibly at a different cost than externally hosted media) utilizing data stored during the initial handoff transaction. In this manner, a user can easily continue a media delivery session without necessarily knowing details about media source or destination network capabilities.

In this example, the smart phone may be in a low power or discharged state, in which case the second pairing transaction may be conducted using wireless power (e.g., NFC burst power) from a recipient device. Such a transaction may involve a simplified display for use in additional security challenges. Alternatively, the smart phone could be temporarily placed in a powered state for purposes of completing a handoff or pairing transaction. In one embodiment, playback position data stored by the device may include a preset fallback period to account for time consumed during the handoff process. Further, the viewer may be presented with pop-up windows that seek approval for continuation of the handoff operation and associated costs.

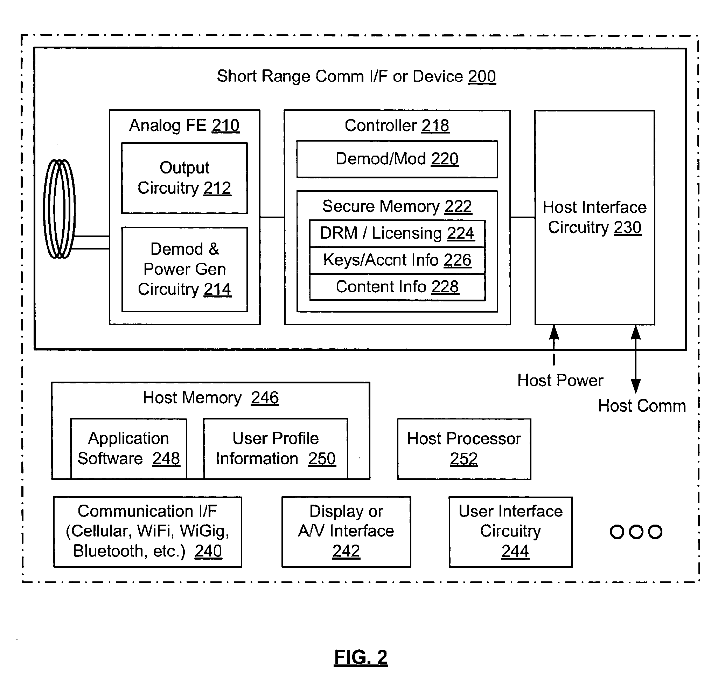

**FIG. 2** illustrates a communication module or device 200 in accordance with an embodiment of the present disclosure. In particular, a short range communication interface or device (device 200) operates to provide secure NFC or like communications (e.g., difficult to snoop, short range contact or near contact communications) for purposes of performing a security pairing operation to enable, for example, handoff of an ongoing media delivery session from one device to a second device. The device 200 may take the form of a standalone device or dongle, or be incorporated within a host device such as a smartphone, television, media player, or other mobile or stationary device, examples of which are described more fully below.

The illustrated device 200 comprises an analog front end 210, including output circuitry 212 and demodulation and power generation circuitry 214, that is coupled to one or more antennae to effectuate inductive electromagnetic coupling and communications with similar devices. Operation of such communications within the context of the disclosure is discussed more fully below in conjunction with subsequent figures.

The device 200 further comprises a controller module 218 having demodulation/modulation circuitry for performing signal processing operations. The illustrated controller module 218 also includes secure memory 222 operable to store a variety of transaction and security-related handoff information. The secure memory 222 may store DRM-related information and other licensing and content security information 224, authorization/session keys and user account information 226, as well as content-related information 228. For example, the secure memory 222 (or, in certain embodiments, host memory 246), may contain current playback position data and related media data such as unique media identifiers, playback format information, bandwidth requirements for delivery of media, and media source information, viewing history, scheduled viewings, authorized purchases, etc. Some or all of such information may be exchanged during security pairing and handoff transactions.

The device 200 further incorporates host interface circuitry 230 operable to receive power from a host device and/or enable unidirectional or bi-directional communications with a host device. Exemplary host devices may comprise a variety of hardware and software functionality and communication capabilities, including a communication interface 240. In certain embodiments, the communication interface 240 is operable to receive media content and, further, may be compliant with a variety of applicable standardized connectivity and messaging protocols (including cellular standards, WiFi, WiGig, Bluetooth, other emerging standards directed toward embedded and mobile devices, etc.). The host device may also include a display or audio/video interface 242 for use in consuming media items. In addition, user interface circuitry 244 (e.g., a touchscreen) may be provided or leveraged to support pairing transactions, billing authorizations, identity verification, etc.

In this embodiment, the device 200 further includes host memory 246 that may store application software 248 (e.g., a service provider application, media viewing application, billing and account management software, etc.) and user/owner profile information 250. Host processing circuitry 252 is operable to playback or transcode media and performs other underlying host device functions.

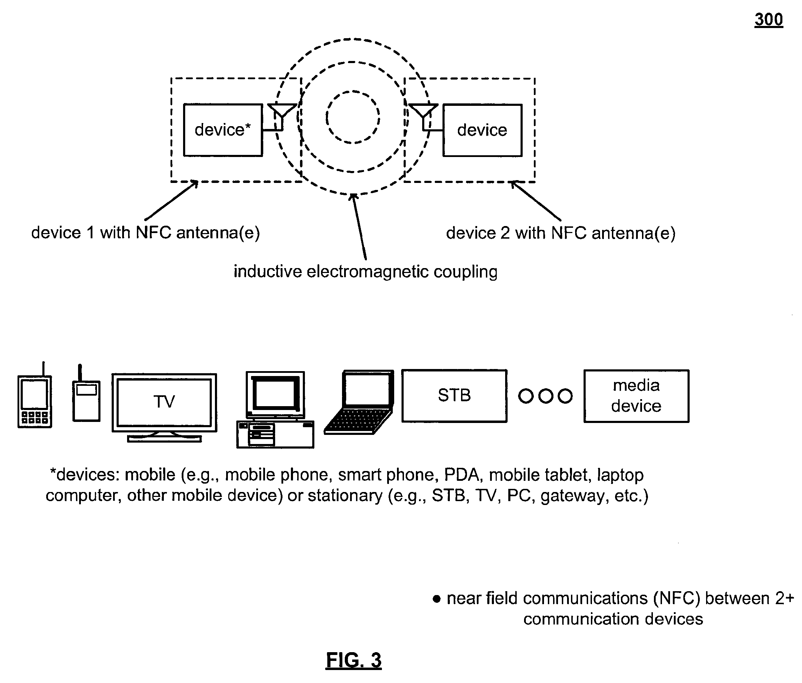

**FIG. 3** illustrates short range wireless or near field communications (NFC) between two or more devices in accordance with an embodiment 300 of the present disclosure. NFC may generally be viewed as communications effectuated using a communication device with one or more other (communication/mobile) devices. Such a communication device may be of a variety of forms (e.g., a personal digital assistant (PDA), a cellular phone, a smart phone, a mobile unit, a television, a computer, a laptop computer, a set top box (STB), mobile tablets, and/or any other type of device that may effectuate wireless communications including any communication device or device including NFC capability therein).

Examples of such applications as may be supported using NFC between communication devices include contactless transactions, data exchange, network access (e.g., such as with the Internet), and/or other types of communications. Generally speaking, such NFC is effectuated via inductive electromagnetic coupling between one or more NFC antennae within one communication device and one or more NFC antennae within another communication device. Oftentimes, such near field communication is performed such that one communication device undergoes a tap, swipe, and/or any other predetermined motion or action with reference to another communication device.

Generally speaking, certain types of communication devices (e.g., smart phones and other mobile devices) are typically battery-powered during operation (though they may be, at times, tethered to a power source such as when plugged into wall power). Some other communication devices (e.g., televisions, computers, STBs, etc.) may not necessarily be battery-powered and/or be wall powered. That is to say, some communication devices may be tied into electric power system receiving a reliable power supply voltage (e.g., 120 V AC at 60 Hz). However, certain other communication devices may be battery-powered or alternatively, be capable of being battery-powered.

As may be understood with respect to such communications between a mobile device and the terminal device, the mobile device will typically be a non-passive device operative using energy provided from a battery or charging device. In contrast to certain communications operating in accordance with radio frequency identification (RFID) technology in which a tag may be a non-powered/passive device, such a mobile device may in a powered state.

As described above, a number of different applications may be supported between various communication devices using NFC. For example, a transaction between communication devices in accordance with NFC may be effectuated by performing a motion of one communication device with respect to another device (e.g., such that a mobile device undergoes a tap, swipe, and/or any other predetermined motion or action with reference to another communication device, such as performed by a user of the mobile device). The use of NFC between two devices may operate to effectuate a security pairing transaction there between. For example, NFC between two devices, such as effectuated by a tapping, swiping, and/or any other predetermined user motion or action of the first device with reference to a second device may operate as a means by which a security pairing transaction may be made between those two respective devices. That is to say, pairing between the two respective devices may be made relatively easily without a great deal of user interaction with either of the devices. The use of NFC may be used in place of or instead of more involved user interaction such as typing in user names, passwords, biometrics, etc. to ensure a secure pairing between the respective devices. For example, NFC may serve as the basis for managing pairing between the two respective devices.

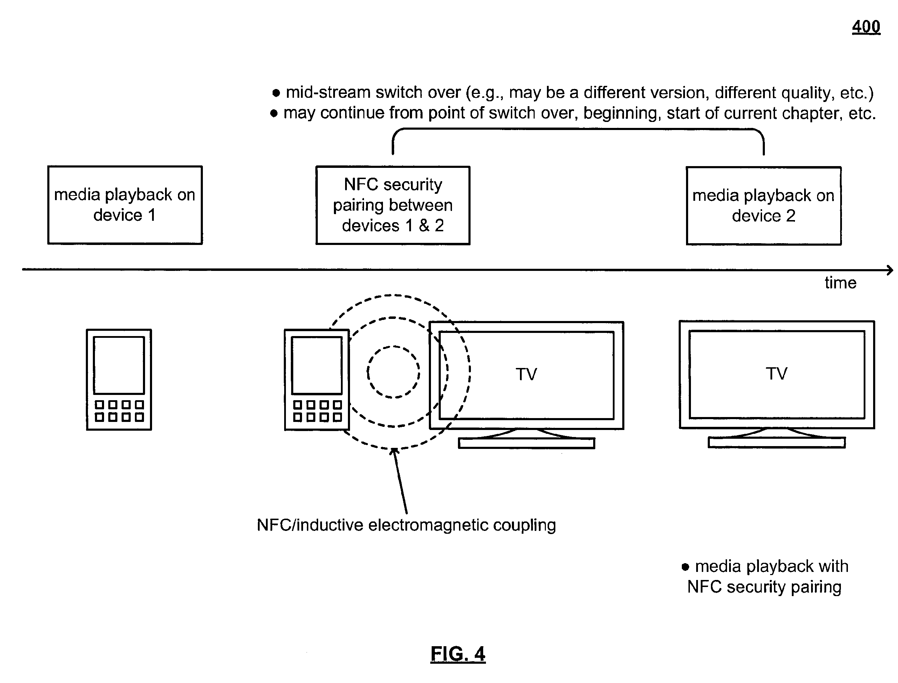

**FIG. 4** illustrates media playback involving NFC security pairing in accordance with an embodiment 400 of the present disclosure. As may be seen with respect to this diagram, a first device can operate to perform playback of media. Then, NFC interaction between the first device and a second device may serve to effectuate a security pairing between those devices. After a successful NFC security pairing transaction between the first device and the second device, the second device can then operate to perform playback of the media as well.

As may be understood, NFC interaction may serve as a basis for managing handoff, cloning, billing, digital rights management (DRM), the use of at least one authentication, authorization, and accounting (AAA) protocol, etc. between two respective devices. Following a NFC security pairing transaction between the two respective devices, a single streaming session may be made across more than one device. For example, the very same media that underwent playback on the first device may then undergo playback on the second device after the NFC security pairing transaction.

In further embodiments, media may be undergoing playback within the first device. Next, the first device and the second device undergo a NFC security pairing transaction. Playback of the media on the second device may begin at any of a variety of times, locations, markers, etc. within the media. For example, if the media underwent playback up until a first time, location, marker, etc., and then the NFC security pairing transaction between the first device and the second device took place, playback of the media on the second device may begin or resume from at or proximate to the first time, location, marker, etc. Alternatively, after the NFC security pairing transaction between the first device and the second device (and with sufficient access to the media), playback of the media on the second device may begin at any other time, location, marker, etc. within the media.

In one instance, playback of the media on the second device may start at the beginning of the media. In another instance, playback of the media on the second device may begin at some time, location, marker, etc. prior to the first time, location, marker, etc. within the media (but not necessarily the beginning of the media) at which the NFC security pairing transaction took place. For example, playback of a movie on the second device may begin or resume from an immediately preceding chapter or point within a movie prior to that which was undergoing playback when the NFC security pairing transaction between the first device and the second device took place (e.g., from the start of a current chapter). Of course, playback of the media on the second device may begin or resume from any prior preceding chapter or point (e.g., some integer number of chapters prior) within the media prior to that which was undergoing playback when the NFC security pairing transaction between the first device and the second device took place.

Generally speaking, midstream, real-time, on-the-fly, etc. handoff, switchover, etc. of media between different respective devices may be made during playback. A relatively minimal amount of user interaction may be employed by using NFC to effectuate pairing between the first device and the second device. Also, it is noted that the same version of the media need not necessarily undergo playback on the two respective devices. For example, the two respective devices may have any one or more different respective capabilities, characteristics, etc. Considering one possible implementation, a first device may be a handheld device having relatively limited capability for playback of media as compared to a stationary device (e.g., in terms of screen resolution, audio/speaker capability, etc.). After a NFC security pairing transaction between the first device and the second device, playback of the media in a different format may be made within the second device in comparison to the first device (e.g., of the different audio or video resolution, aspect ratio, etc.).

For example, a user may be watching a movie on a handheld device and want to transfer the watching of that same movie to a stationary device, such as a high definition television in a hotel room. A relatively lower quality version of the movie may be undergoing consumption by the user on the handheld device (e.g., cell phone, smartphone, PDA, etc.), and the user may desire to transfer consumption of that movie to a relatively higher capability type device. After mating the relatively lower capability device and the relatively higher capability device, the consumption of the media is handed off to the relatively higher capability device for consumption by the user.

It is also noted that, if the two respective devices have at least one common or similar operational state, then playback of the media may be made in a similar manner within both of the respective devices (e.g., in accordance with the same quality, resolution, etc.). If desired, while playback of the media on second device to which the media has been handed off may be same as or different than the manner in which the media is being playback on first device, user interaction with the second device may operate to override the automatic and seamless manner in which the media is to be played back on the second device.

The use of NFC security pairing between the two respective devices will allow for a midstream switchover between the respective devices with relatively little user interaction. That is to say, the NFC security pairing transaction operates to perform the switchover or handoff of the media from the first device to the second device in accordance with any of a number of constraints or operational parameters. For example, the NFC security pairing transaction may operate to translate billing, security, digital rights management (DRM), authentication, authorization, and accounting (AAA) protocol, etc. from the first device to the second device. In addition or alternatively, the NFC security pairing transaction may operate to translate the media from a first format or version into a second format or version automatically as triggered by the NFC security pairing transaction. Such a midstream switchover of the media from a first device to a second device may be viewed as being performed automatically, behind-the-scenes, seamlessly, etc.

It is also noted that the source providing the media need not necessarily be the same for the first device and the second device (e.g., from different respective servers, different respective storage devices, different respective service providers such as Internet service providers, television service providers, etc.). That is to say, the first device may be playback media received via a first source, while the second device may play the media as received from a second source. It is noted that while the media may be similar in content (e.g., the same video clip, the same movie, the same song, etc.), there may be two instantiations of that media that are received from two respective sources, and those two instantiations of the media need not necessarily be of the same identical format (e.g., they may have different respective resolution, frame rate, audio sampling rate, etc.). Generally speaking, it may be understood that access to different versions of a given media may change over time, and that media item be received from different sources during a given media consumption session. For example, changes in media format may be caused by any of a number of considerations (e.g., provider online presence, content presence, communication pathway changes, changes in a viewing device, etc. that may occur sometime during the playback of the media for consumption by a user).

In order to effectuate (NFC) security transactions, a given device may be provisioned to have some form of security mechanism/protocol (e.g., a key-based mechanism), and the ID number of the device and other information can thereby be safely shared. A security pairing server may include the respective relationships between different respective devices. As a security transaction is made between different respective devices, the security pairing server may authenticate or verify the security transaction to determine whether or not it is a valid and approved security parent transaction to pair up the two respective devices. For example, a security pairing server may have the respective ID numbers associated with different respective devices, and as the security transaction is made between the respective devices, the security pairing server (which may be located local, remote or distributed, and communicate via one or more networks or communication links, etc.) may be accessed and operate to verify whether or not the transaction is a valid and approved security pairing transaction. Such pairing between respective devices may be made on either of a host side or a client side with reference to two respective devices. For example, with respect to client side pairing, a secret key may be included within a client device, and as the client device connects with the host device, then verification of the pairing between those two devices may be made via the security pairing server (e.g., which may be cloud implemented, such as via one or more networks or communication links, etc.).

As may be understood, it is noted that in certain embodiments the security pairing transaction is operative to provide a seamless transition from the first device to the second device for any or all of a number of operational considerations including security, authorization, billing, etc. The use of NFC to effectuate the security pairing between the devices allows for a relatively minimal amount of user interaction (e.g., a wireless NFC interaction, near contact, etc.) to establish a secure proximity between the respective devices (e.g., for key exchange, secure AAA processing, handoff, etc.).

Considering possible embodiments involving AAA processing, the relative percentage of time during which the media is undergoing playback on the first device in comparison and relative to the second device may be used to allocate the respective billing information associated with the playback of the media across the different devices. For example, considering a situation in which the media is provided from two or more sources (e.g., broadcast media, an internet unicast source, etc.), the amount of time that the media undergoes playback from each of the respective sources may be proportionally allocated in terms of billing a user for consumption of the media.

It is also noted that there may be some instances in which a user may be billed for more than the amount corresponding to one singular playback of the media (e.g., such as in those instances in which at least a portion of the media undergoes playback more than once, such as during the restart of the media from the beginning, a prior point or marker within the media, etc. in which the entirety of the media plus at least one additional portion of the media undergo playback on the respective devices). Also, there may be instances in which a free preview of the media (which may be at a relatively lower quality) initially undergoes playback on a first device, and a user may then desire to consume the media at a relatively higher quality on a second device. The NFC security pairing transaction may offer to trigger not only the transition of playback of the media from the first device to the second device, but also the transition from a relatively lower quality format of the media (e.g., free preview) to a relatively higher quality format of the media (e.g., pay-per-view, via a communication pathway having a minimum or guaranteed bandwidth).

In addition, while NFC security pairing between respective devices has been described with respect to various embodiments herein, it is noted that additional security considerations may also be employed. For example, certain biological authentication of a user may accompany the NFC security pairing between devices. That is to say, any use of a biometric (e.g., fingerprint, image recognition/verification of a photo taken of user by the device, etc.) may be used to provide an additional layer level of security to ensure that the NFC security pairing between devices is in fact valid and should be authorized.

It is noted that, within any of the respective embodiments herein or their equivalents, after handoff between respective devices has been performed, the first device from which the media has been handed off may cease playback of the media. In some instances, that first device may turn off, enter into a relatively lower power operational state, a relatively lower functionality operational state, a sleep state, etc. after the handoff of the media has been made for playback on a second device.

Also, it is noted that there may be only conditional access from a first device to one or more other second devices. For example, while a number of respective devices may include NFC capability, only those devices authorized to effectuate the transaction may be allowed. Also, there may be conditional access of media only among certain respective devices. That is to say, certain media may only be authorized to undergo playback on certain respective devices, and only when NFC security pairing is made between such authorized devices may the media undergo handoff there between. Generally speaking, a number of rules may be implemented to effectuate the particular devices which may undergo pairing based on NFC, which particular pairs of devices may be authorized to undergo pairing based on NFC, the particular media which may be handed off between devices, the operational parameters by which media is to undergo playback on different respective devices, etc. Such rules may be implemented within a table, look up table, matrix, etc. that may be accessible by any one or more of the devices within the system. Such rules may be centrally located on a given device (e.g., such as a server or set top box), may be distributed among more than one device, portable such that they undergo handoff between receptive devices such as based upon NFC pairing, downloadable through a configuration application, etc.

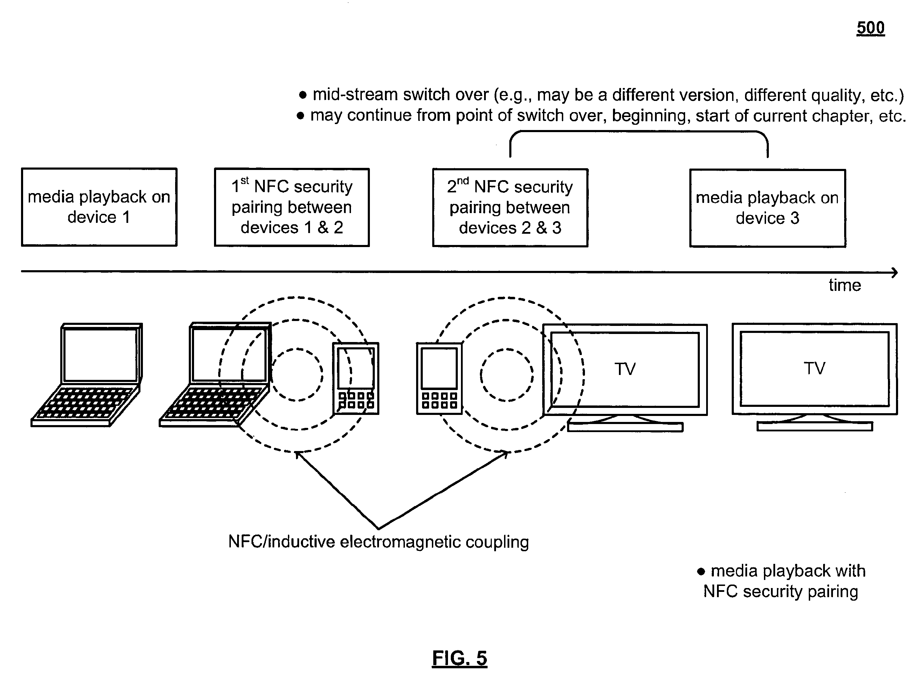

**FIG. 5** illustrates media playback with NFC security pairing in accordance with an alternate embodiment 500 of the present disclosure. As depicted within this diagram, a given device may serve to effectuate the NFC pairing between the two other devices. As illustrated within this particular example, a mobile device undergoes NFC pairing with two different other respective devices (e.g., a laptop computer the television). In other words, a first NFC security pairing transaction may be effectuated between a first and a second device, and a second NFC security pairing transaction may be effectuated between the second and third device. There may be instances in which the first device and the third device are both stationary devices, though generally speaking, any type of device may undergo NFC pairing. For example, the second device may be a stationary set top box or gateway device. As may be understood with respect to at least one preferred embodiment, at least one of the devices may be transported to different locations by a user (e.g., such as a mobile device).

Operation in accordance with this particular diagram illustrates how handoff of media between different respective devices may be made with respect to more than two respective devices. For example, during the time period after the first NFC security pairing is made between the first and the second device and before the time period at which the second NFC pairing is made between the second and the third device, there may be an intervening period of time during which media undergoes playback on the second device. Alternatively, there may be no media playback on the second device, and the third device begins or resumes media playback correspondingly based from the first device. There may be some instances in which the second device merely serves as a transitional or intermediary type device to effectuate the pairing of the first device of the third device, or there may be some instances in which the second device operates to perform playback of the media as well. Generally speaking, any of a number of different respective devices may undergo successive NFC security pairing there between in accordance with successive handing off of media between the respective devices.

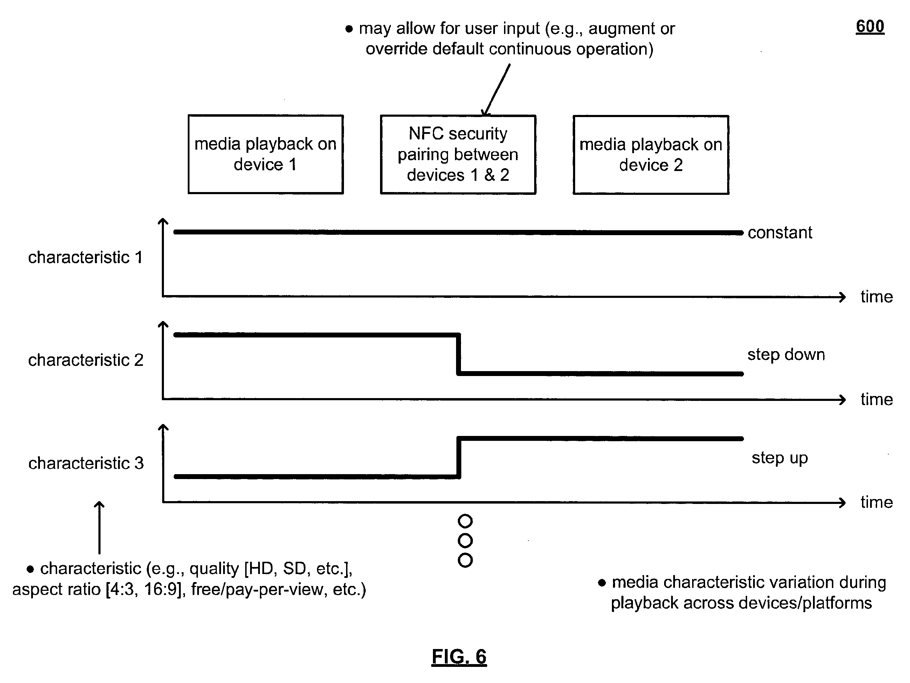

**FIG. 6** illustrates media characteristic variation during playback across devices/platforms in accordance with an embodiment 600 of the present disclosure. Any one or more respective characteristics associated with playback of media on different respective devices may be the same or modified after handoff for transition from a first device to a second device. Any of a number of exemplary characteristics 1-3 (e.g., quality such as high-definition versus standard definition, aspect ratio such as 4:3 versus 16:9, free versus pay per view, etc.) may be the same for playback of the media on a first device and the second device. Alternatively, any such characteristic 1-3 may be modified for playback of the media on the second device with reference to that particular characteristic employed for playback of the media on the first device.

As also described with respect other embodiments herein, it is noted that user interaction with one or more of the devices may operate to augment or override any default, automatic, seamless, etc. or continuous operation between the respective devices. Moreover, as also described with respect to certain rules which may be implemented to govern the interactive operation between respective devices, there may be different respective rules respectively implemented for the pairing of different respective devices (e.g., pairing between devices A and B operates to effectuate playback of media in accordance with constant or same characteristic, pairing between devices A and C operates to effectuate playback of media in accordance with different [e.g., stepped up or step down] characteristic, etc.).

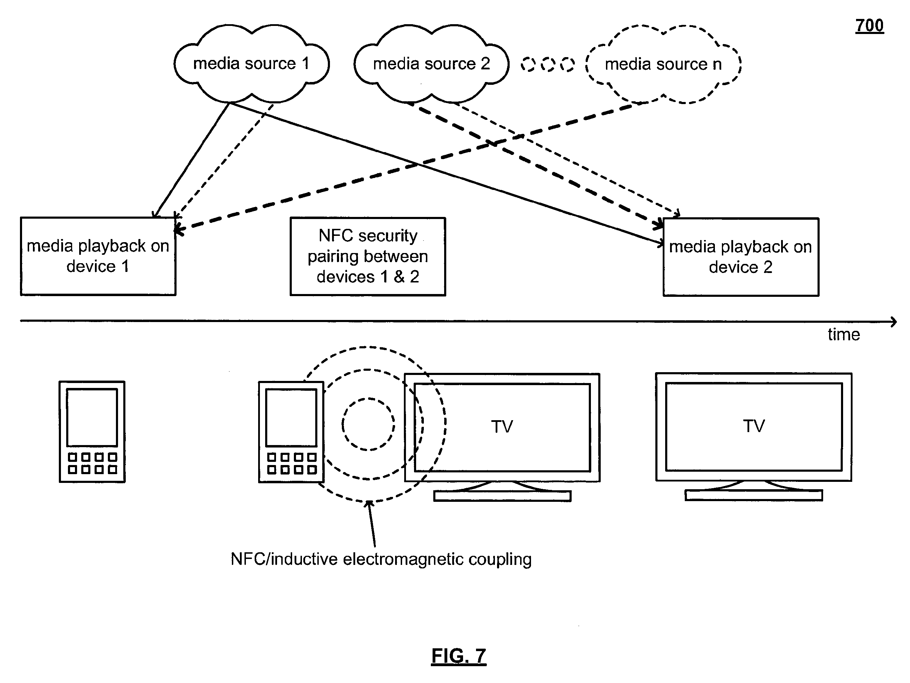

**FIG. 7** illustrates media delivery to different respective devices from one or more sources in accordance with an embodiment 700 of the present disclosure. As also described with respect to other embodiments herein, it is noted that the media undergoing playback across different respective devices need not necessarily be provided from the same media source or media provider. For example, while playback of media on the first device and the second device may be made based upon the media being provided from the same media source, playback of media on the first device and the second device may alternatively be made based upon media being provided from different respective media sources. In addition, it is noted that playback of media on any one particular device may also transition from playback of media from a first media sourced playback of media from a second media source.

As an example, during a first time period, media provided from a first source may undergo playback on first device. Then, during a second time period, media provided from a second source may undergo playback on the second device. Again, the media may be common in content (e.g., the same video clip, the same movie, the same song, etc.); yet different instantiations of that media may be received from different respective sources. As may be understood, while the media may be common in content, instantiations of that media may be of different respective quality. In a further embodiment, a mobile device such as a smart phone may handoff a media stream, in which it is receiving a first layer of video content, to a relatively higher resolution media device. Following handoff, the smart phone may provide the first layer of video content to the media device. The media device may then receive additional layers of video content from one or more additional sources.

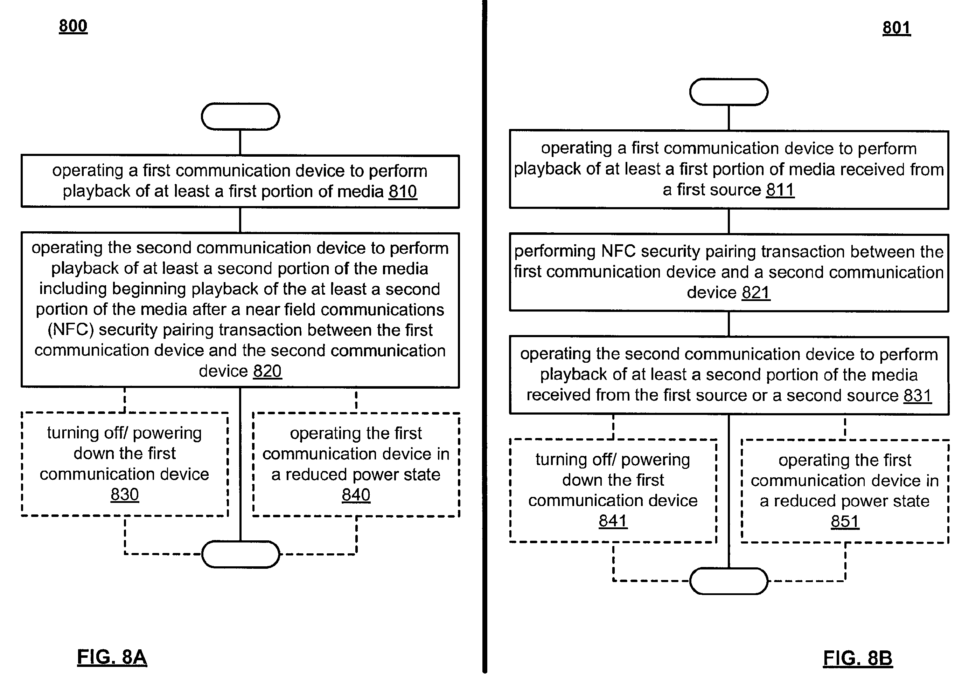

**FIG. 8A, FIG. 8B****,** **FIG. 9****,** and **FIG. 10** illustrate various embodiments of methods for operating one or more communication devices in accordance with the present disclosure. Referring first to method 800 of **FIG. 8A****,** the method 800 begins by operating a first communication device to perform playback of at least a first portion of media, as shown in a block 810. The method 800 continues by operating the second communication device to perform playback of at least a second portion of the media including beginning playback of the at least a second portion of the media after a near field communications (NFC) security pairing transaction between the first communication device and the second communication device, as shown in a block 820. In certain alternative embodiments, the method 800 then operates by turning off or powering down the first communication device, as shown in a block 830. Alternatively, the method 800 continues by operating the first communication device in a reduced power state, as shown in a block 840.

Referring to method 801 of **FIG. 8B****,** the method 801 begins by operating a first communication device to perform playback of at least a first portion of media received from a first source, as shown in a block 811. The method 801 then operates by performing NFC security pairing transaction between the first communication device and a second communication device, as shown in a block 821. The method 801 continues by operating the second communication device to perform playback of at least a second portion of the media received from the first source or a second source, as shown in a block 831. In certain alternative embodiments, the method 801 then operates by turning off/powering down the first communication device, as shown in a block 841. Alternatively, the method 800 continues by operating the first communication device in a reduced power state, as shown in a block 851.

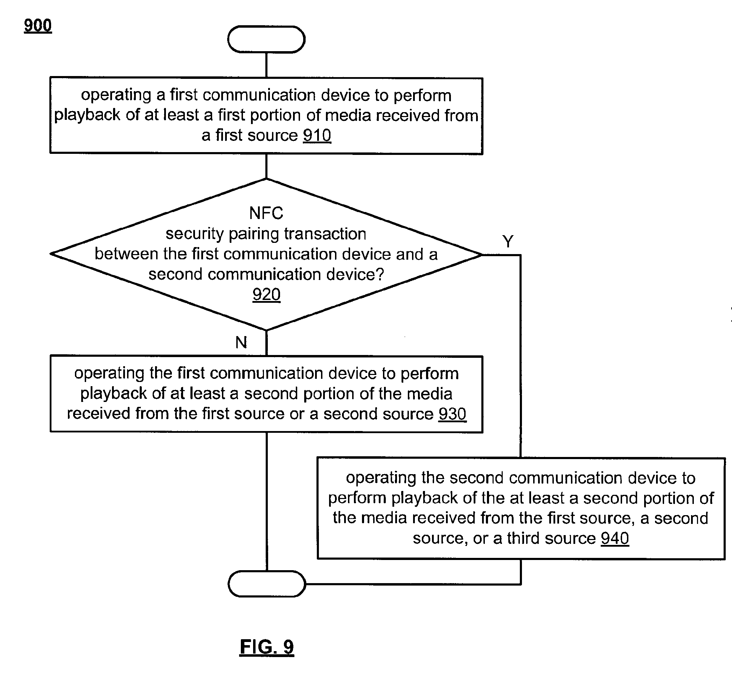

Referring to method 900 of **FIG. 9****,** the method 900 begins by operating a first communication device to perform playback of at least a first portion of media received from a first source, as shown in a block 910. The method 900 continues by determining whether or not a NFC security pairing transaction between the first communication device and a second communication device has in fact occurred, as shown in a block 920.

If a NFC security pairing has in fact been made between the first communication device and a second communication device, the method 900 then continues by operating the second communication device to perform playback of the at least a second portion of the media received from the first source, a second source, or a third source, as shown in a block 940. However, if a NFC security pairing has not been made between the first communication device and a second communication device, the method 900 then continues by operating the first communication device to perform playback of at least a second portion of the media received from the first source or a second source, as shown in a block 930.

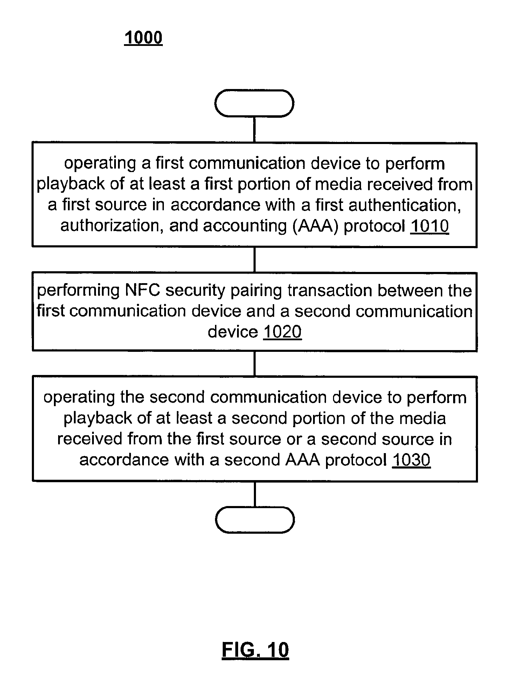

Referring to method 1000 of **FIG. 10****,** the method begins by operating a first communication device to perform playback of at least a first portion of media received from a first source in accordance with a first authentication, authorization, and accounting (AAA) protocol, as shown in a block 1010. The method continues by performing NFC security pairing transaction between the first communication device and a second communication device, as shown in a block 1020. The method 1000 then operates by operating the second communication device to perform playback of at least a second portion of the media received from the first source or a second source in accordance with a second AAA protocol, as shown in a block 1030.

It is also noted that the various operations and functions as described with respect to various methods herein may be performed within a variety of types of communication devices, such as using one or more processors, processing modules, etc. implemented therein, and/or other components therein including one of more baseband processing modules, one or more media access control (MAC) layers, one or more physical layers (PHYs), and/or other components, etc.

In some embodiments, such a processor, circuitry, and/or a processing module, etc. (which may be implemented in the same device or separate devices) can perform such processing to generate signals for communication with other communication devices in accordance with various aspects of the invention, and/or any other operations and functions as described herein, etc. or their respective equivalents. In some embodiments, such processing is performed cooperatively by a first processor, circuitry, and/or a processing module, etc. in a first device, and a second first processor, circuitry, and/or a processing module, etc. within a second device. In other embodiments, such processing is performed wholly by a processor, circuitry, and/or a processing module, etc. within a singular communication device.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "operably coupled to", "coupled to", and/or "coupling" includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

As may also be used herein, the terms "processing module", "module", "processing circuit", and/or "processing unit" (e.g., including various modules and/or circuitries such as may be operative, implemented, and/or for encoding, for decoding, for baseband processing, etc.) may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may have an associated memory and/or an integrated memory element, which may be a single memory device, a plurality of memory devices, and/or embedded circuitry of the processing module, module, processing circuit, and/or processing unit. Such a memory device may be a read-only memory (ROM), random access memory (RAM), volatile memory, non-volatile memory, static memory, dynamic memory, flash memory, cache memory, and/or any device that stores digital information. Note that if the processing module, module, processing circuit, and/or processing unit includes more than one processing device, the processing devices may be centrally located (e.g., directly coupled together via a wired and/or wireless bus structure) or may be distributedly located (e.g., cloud computing via indirect coupling via a local area network and/or a wide area network). Further note that if the processing module, module, processing circuit, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processing module, module, processing circuit, and/or processing unit executes, hard coded and/or operational instructions corresponding to at least some of the steps and/or functions illustrated in one or more of the Figures. Such a memory device or memory element can be included in an article of manufacture.

The present invention has been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

The present invention may have also been described, at least in part, in terms of one or more embodiments. An embodiment of the present invention is used herein to illustrate the present invention, an aspect thereof, a feature thereof, a concept thereof, and/or an example thereof. A physical embodiment of an apparatus, an article of manufacture, a machine, and/or of a process that embodies the present invention may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

Unless specifically stated to the contra, signals to, from, and/or between elements in a figure of any of the figures presented herein may be analog or digital, continuous time or discrete time, and single-ended or differential. For instance, if a signal path is shown as a single-ended path, it also represents a differential signal path. Similarly, if a signal path is shown as a differential path, it also represents a single-ended signal path. While one or more particular architectures are described herein, other architectures can likewise be implemented that use one or more data buses not expressly shown, direct connectivity between elements, and/or indirect coupling between other elements as recognized by one of average skill in the art.

The term "module" is used in the description of the various embodiments of the present invention. A module includes a functional block that is implemented via hardware to perform one or module functions such as the processing of one or more input signals to produce one or more output signals. The hardware that implements the module may itself operate in conjunction with software, and/or firmware. As used herein, a module may contain one or more sub-modules that themselves are modules.

While particular combinations of various functions and features of the present invention have been expressly described herein, other combinations of these features and functions are likewise possible. The present invention is not limited by the particular examples disclosed herein and expressly incorporates these other combinations.

## Claims

1. A device that supports an ongoing media delivery session arranged between a host device and a media player system, the ongoing delivery session of first media having current playback position data and related media data, the arrangement involving a first secure interaction between the host device and the media player system, the device supporting a first user, the device comprising:
a first communication interface that communicatively couples via at least one of contact and near contact;
processing circuitry coupled to the first communication interface;
memory coupled to the processing circuitry;
host circuitry, operable to play media content, having a first characteristic relating to media playback;
a second communication interface coupled to the host circuitry;
a third communication interface operable to receive media content;
the processing circuitry being operable, via the first communication interface, both to receive the media data and the current playback position data and to send the first characteristic; and
the host circuitry beginning playback of the first media at a location within the first media relating to the current playback position data, and establishing the playback by the host circuitry is simplified for the first user.

2. The device of claim 1, wherein the first communication interface communicatively couples via near field communications (NFC).

3. The device of claim 1 or 2, the processing circuitry further operable, via the first communication interface and memory, to exchange authentication, authorization and accounting (AAA) protocol information.

4. The device of any of claims 1 to 3, the processing circuitry further operable, via the first communication interface, to send media data and updated playback position data in support of a second secure interaction involving the ongoing media delivery session.

5. The device of any of claims 1 to 4, the host circuitry operable to playback a different version or format of the first media as indicated, at least in part, by the first characteristic.

6. The device of any preceding claim, the first characteristic relating to a video resolution supported by the host circuitry.

7. The device of any preceding claim, the memory configured with secure key exchange information.

8. The device of any preceding claim, the media data including at least one item of information selected from the group consisting of: unique media identifier, playback format information, bandwidth requirements for delivery of media, and media source information.

9. A device that supports handoff of an ongoing media delivery session arranged between a host device and a media source, the ongoing delivery session of first media having current playback position data and related media data, the handoff involving a secure interaction between the host device and a recipient device, the device comprising:
a first communication interface that communicatively couples via at least one of contact and near contact;
processing circuitry coupled to the first communication interface;
memory coupled to the processing circuitry;
host circuitry, operable to play media content;
a second communication interface coupled to the host circuitry;
a third communication interface operable to receive media content from the media source; and
the processing circuitry being operable, via the first communication interface, to send the media data and the current playback position data.

10. The device of claim 9, wherein the first communication interface communicatively couples via near field communications (NFC).

11. The device of claim 9 or 10, the processing circuitry further operable, via the first communication interface and memory, to securely exchange authentication, authorization and accounting (AAA) protocol information with a recipient device.

12. The device of any of claims 9 to 11, the memory configured with secure key exchange information.

13. The device of any of claims 9 to 12, wherein the device comprises a smart phone.

14. A method for operating a first communication device and a second communication device, the method comprising:
operating the first communication device to perform playback of at least a first portion of media; and
operating the second communication device to perform playback of at least a second portion of the media, including beginning playback of the at least a second portion of the media following a contact or near contact security pairing transaction between the first communication device and the second communication device.

15. The method of claim 14, the contact or near contact security pairing transaction comprising near field communications (NFC).
